# EUROPÄISCHE PATENTSCHRIFT

(11) **EP 1 740 439 B1**
(45) Veröffentlichungstag und Bekanntmachung des Hinweises auf die Patenterteilung: **24.06.2009**
(21) Anmeldenummer: 05748029.5
(22) Anmeldetag: 14.04.2005
(51) Int. Cl.: B62D 15/02

(54) **EINPARKASSISTENZSYSTEM UND VERFAHREN ZUM EINPARKEN**
PARKING ASSISTANCE SYSTEM AND PARKING METHOD
SYSTEME D'ASSISTANCE DE STATIONNEMENT ET PROCEDE DE STATIONNEMENT

(30) Priorität: 16.04.2004 DE 102004019204
(43) Veröffentlichungstag der Anmeldung: 10.01.2007
(73) Patentinhaber: Volkswagen Aktiengesellschaft, 38436 Wolfsburg (DE)
(72) Erfinder: ROHLFS, Michael, Dr., 38531 Rötgesbüttel (DE); CHLOSTA, Sven, 38547 Calberlah (DE)
(74) Vertreter: Meyer, Enno
(86) Internationale Anmeldenummer: PCT/EP2005/003964
(87) Internationale Veröffentlichungsnummer: WO 2005/100134

(56) Entgegenhaltungen:
- EP-A- 0 835 796
- US-A1- 2004 017 287
- US-A1- 2004 020 699
- PATENT ABSTRACTS OF JAPAN Bd. 1999, Nr. 12, 29. Oktober 1999 (1999-10-29) & JP 11 198840 A (HONDA MOTOR CO LTD), 27. Juli 1999 (1999-07-27)

## Beschreibung

Die Erfindung betrifft ein Einparkassistenzsystem zum unterstützten oder automatischen Einparken eines Kraftfahrzeuges.

Einparkassistenzsysteme gehören zur Gruppe der Fahrerassistenzsysteme, die zunehmend in Fahrzeugen zur Erhöhung des Komforts und/oder zur Unterstützung der Sicherheit eingesetzt werden. Einfachste Fahrerassistenzsysteme sind beispielsweise das bekannte ABS-System (Antiblockier-System), welches eine Blockierung der Räder beim Bremsen verhindert, sowie das ESP-System, das elektronische Stabilitätsprogramm, welches in kritischen Fahrsituationen einzelne Räder gezielt abbremst, um ein Ausbrechen des Fahrzeugs zu verhindern.

Weitere Fahrerassistenzsysteme, deren Einsatz in Kraftfahrzeugen in jüngster Zeit diskutiert werden, sind das Einparkassistenzsystem oder Einparkassistent, das dem Fahrer eines Kraftfahrzeuges beim Einparken unterstützt oder in der Endausbaustufe das Einparken selbsttätig durchführt.

In seiner einfachsten Form ist ein derartiger Einparkassistent eine Einparkhilfe, bei der die Abstände des Fahrzeugs nach vorne und/oder hinten zu anderen Fahrzeugen oder Hindernissen gemessen und beispielsweise auf einem Display im Cockpit angezeigt werden. Im Fall des Unterschreitens vorgegebener Sicherheitsabstände wird eine optische, akustische und/oder haptische Warnung an den Fahrer abgegeben, so dass dieser seinen Einparkvorgang entsprechend steuern kann. Derartige Einparkhilfen gehören mittlerweile zu den Sonderausstattungen von Fahrzeugen der Mittelklasse.

In der nächsten Ausbaustufe, wie sie beispielsweise in der EP 1 160 146 A2 beschrieben wird, wird der rückwärtige Raum des einparkenden Fahrzeuges mit einer Kamera überwacht und das Bild des überwachten rückwärtigen Raumes wird auf einem Bildschirm im Cockpit des Fahrzeuges dargestellt. Anhand der Darstellung kann der Fahrer nun seinen Parkvorgang entsprechend ausführen.

Aus der US 2002/0 128 754 A1 ist ein System der nächsten Ausbaustufe bekannt, bei dem ebenfalls eine Kamera ein Bild des rückwärtigen Raumes eines einparkenden Fahrzeugs an den Fahrer liefert. Über eine geeignete Sensorik und Recheneinheit wird eine EinparkVajektorie berechnet und auf einen Bildschirm ausgegeben. Ferner wird die tatsächlich ausgeführte Trajektorie bestimmt und ebenfalls dargestellt, so dass der Fahrer seinen Einparkvorgang sozusagen online nachverfolgen kann, wobei durch eine Messung des Lenkwinkels und der Kenntnis der Fahrzeuggeschwindigkeit die tatsächlich gefahrene Trajektorie ermittelt wird. Bei dieser Einparkhilfe werden ferner weitere Systemparameter abgefragt und überprüft, beispielsweise die Geschwindigkeit des rückwärts einparkenden Fahrzeuges, und es wird eine Warnung abgegeben, wann die Geschwindigkeit zu hoch ist. Allerdings handelt es sich auch hier um eine Einparkhilfe und ein aktiver Eingriff in die Lenkung zur Unterstützung des Fahrers bzw. ein automatisches Einparkmanöver ist nicht vorgesehen.

Die JP-11-198840A offenbart ein Einparkassistenzsystem sowie ein Verfahren zum unterstützten oder automatischen Einparken eines Kraftfahrzeugs mit einem Einparkassistenten und einem Lenkaktuator, wobei der Fahrer zum automatischen / unterstützten Einparken einen Lenkeingriff anfordern kann, wobei beim Anfordern eines Lenkeingriffs seitens des Fahrers eine Sicherheitsprüfung von relevanten Systemfunktionen und/oder Systemparametern vorgenommen wird, wobei überprüft wird, ob ein Lenkwinkelgeber keinen Fehler meldet, und wobei überprüft wird, ob ein automatischer Lenkeingriff angefordert ist, und wobei der angeforderte Lenkeingriff nicht durchgeführt wird, wenn eine der obigen Bedingungen nicht erfüllt ist.

Ferner sind bekannte Systeme mit Sensoren und Steuergeräten zum Ausmessen von Parklücken und Parktaschen bekannt, die dem Fahrer angeben, ob eine Parklücke für sein Fahrzeug geeignet ist oder nicht.

Weitere Fahrerassistenzsysteme unterstützen den Fahrer beim Einparkvorgang, beispielsweise durch Auffinden einer geeigneten Ausgangsposition für den Einparkvorgang, Vorgeben eines geeigneten Lenkwinkels oder einen automatischen Lenkeingriff, falls die Lenkbewegung des Fahrers nicht zum Ziel führt.

Ferner sind Systeme in der Erprobung, die einen automatischen Parkvorgang nach vorheriger Vermessung der Parklücke durchführen.

Aufgrund der Ablösung der hydraulischen Servolenkung durch eine elektromechanische Servolenkung, wie sie beim heutigen Touran bzw. Golf eingesetzt wird, ist ein Motor für eine elektromechanische Servolenkung, d.h., ein Lenkaktuator, vorhanden, der auch für einen aktiven Lenkeingriff bei einem Parkvorgang verwendet werden könnte, so dass Einparkassistenzsysteme, ob unterstützend oder automatisch, bei modernen Kraftfahrzeugen in Zukunft Verwendung finden werden. Allerdings darf aus Sicherheitsgründen beim Einsatz eines derartigen Einparkassistenzsystems ein aktiver Lenkeingriff nur unter bestimmten Voraussetzungen erfolgen.

Der Erfindung liegt daher die Aufgabe zugrunde, ein Einparkassistenzsystem zu schaffen, welches ein sicheres Einparken ermöglicht und die Assistenz beendet, wenn der Einparkvorgang nur in unsicherer Weise ausgeführt werden kann.

Die Aufgabe wird durch ein Einparkassistenzsystem mit den Merkmalen des Anspruchs 1 und ein Verfahren zum unterstützten oder automatischen Einparken mit den Merkmalen des Anspruchs 16 gelöst. Bevorzugte Ausgestaltungen der Erfindung sind Gegenstand der Unteransprüche.

Ein erfindungsgemäßes Einparkassistenzsystem zum Unterstützen eines Fahrers beim Einparken eines Kraftfahrzeugs umfasst einen Einparkassistenten und einen Lenkaktuator, wobei der Fahrer zum automatischen oder unterstützenden Einparken einen Lenkeingriff anfordern kann. Bei dem Anfordern eines solchen Lenkeingriffs seitens des Fahrers wird eine Sicherheitsprüfung von relevanten Systemfunktionen und/oder Systemparametern vorgenommen, wobei mindestens überprüft wird:
- ob der Einparkassistent fehlerfrei arbeitet, d.h., keinen Fehler meldet,
- ob der Lenkaktuator fehlerfrei arbeitet, d.h., keinen Fehler meldet,
- ob die Kommunikation zwischen Einparkassistent und Lenkaktuator fehlerfrei arbeitet, d.h., keinen Fehler aufweist, und
- ob eine Anforderung eines automatischen Lenkeingriffs vorliegt.
Wird mindestens eine der Bedingungen nicht erfüllt, so wird die Assistenz beendet.

Vorzugsweise werden noch mindestens eine oder mehrere der folgenden Systemfunktionen oder Systemparameter überprüft:
a) der Betrag der Fahrzeuggeschwindigkeit ist kleiner als eine vorgegebene Geschwindigkeit,
b) der Rückwärtsgang ist eingelegt
   oder der Rückwärtsgang war vor einer Zeit T, die kleiner ist als eine vorgegebene Zeit Tmax, noch eingelegt und das Fahrzeug steht,
c) es erfolgt kein Lenkeingriff des Fahrers,
d) dem Steuergerät sind keine Eingriffe weiterer Assistenzfunktionen, wie beispielsweise ESP, ABS und/oder ASR, gemeldet,
e) der Betrag des Lenkmoments M_{L} ist kleiner als ein vorgegebenes Lenkmoment M_{Lmax},
f) der Betrag der Lenkgeschwindigkeit V_{L} ist kleiner als eine vorgegebene Lenkgeschwindigkeit V_{Lmax},
g) die Abweichung von einer berechneten Sollbahn ist kleiner als ein vorgegebener Wert,
Im Fall eines negativen Ergebnisses der Überprüfung wird die Assistenz beendet.

Vorzugsweise wird dem Fahrer im Fall eines Abbruchs des angeforderten Lenkeingriffs eine optische und/oder akustische und/oder haptische Warnung zugeführt.

Vorzugsweise weisen sowohl der Einparkassistent als auch der Lenkaktuator jeweils ein Steuergerät auf. In diesem Fall wird vorzugsweise überprüft, ob das Steuergerät des Einparkassistenten fehlerfrei arbeitet, ob das Steuergerät des Lenkaktuators fehlerfrei arbeitet und ob die Kommunikation zwischen den beiden Steuergeräten fehlerfrei ist.

Vorzugsweise wird die oben aufgeführte Sicherheitsprüfung im Steuergerät des Lenkaktuators und/oder im Steuergerät des Einparkassistenten vorgenommen, und im Fall eines Abbruchs des angeforderten Lenkeingriffs wird die Assistenz des Steuergeräts des Einparkassistenten beendet.

Insbesondere meldet das Steuergerät des Einparkassistenten dem Steuergerät des Lenkaktuators das Vorliegen der Anforderung eines Lenkeingriffs.

Vorzugsweise überprüft das Steuergerät des Lenkaktuators die oben genannten Systemfunktionen oder Systemparametern a) bis f), wobei im Fall eines negativen Ergebnisses der Überprüfung der genannten Systemfunktionen der Lenkeingriff abgebrochen und die Assistenz beendet wird.

Vorzugsweise werden die Systemfunktionen bzw. Systemparameter a) bis d) und g) von dem Steuergerät des Einparkassistenten überprüft, wobei noch überprüft wird, ob h) das Steuergerät des Lenkaktuators keinen Abbruch des angeforderten Lenkeingriffs meldet. Im Fall eines negativen Ergebnisses der Überprüfung der genannten Systemfunktionen bzw. Systemparameter wird die Assistenz des Einparkassistenten beendet und es erfolgt ein Abbruch des Lenkeingriffs.

Vorzugsweise weist das Einparkassistenzsystem eine Vorrichtung zur Vermessung von Parklücken und/oder Parktaschen auf, wobei insbesondere das Steuergerät des Einparkassistenten aus den Daten der Vermessungsvorrichtung eine Trajektorie zum Einparken berechnet und daraus LenkmomenNorgaben und/oder Lenkwinkelvorgaben für das Steuergerät des Lenkaktuators bestimmt.

Vorzugsweise sind die Steuergeräte des Lenkaktuators und des Einparkassistenzsystems über einen Bus, insbesondere ein CAN-Bus verbunden. Die weiteren Steuergeräte anderer Assistenzsysteme sind vorzugsweise ebenfalls mit dem Bus verbunden. Die Zyklusdauer der Datenübertragung zwischen den Steuergeräten des Lenkaktuators und des Einparkassistenten beträgt kleiner oder gleich 10 ms.

Bei dem erfindungsgemäßen Verfahren zum unterstützen oder automatischen Einparken eines Kraftfahrzeugs mittels eines Einparkassistenzsystems umfassend einen Einparkassistenten und einen Lenkaktuator, wobei der Fahrer zum automatischen oder unterstützten Einparken einen Lenkeingriff anfordern kann, wird beim Anfordern eines Lenkeingriffs seitens des Fahrers eine Sicherheitsprüfung von relevanten Systemfunktionen und/oder Systemparametern vorgenommen wird, wobei mindestens überprüft wird:
- ob der Einparkassistent (11) keinen Fehler meldet,
- ob der Lenkaktuator (13) keinen Fehler meldet,
- ob die Kommunikation zwischen Einparkassistent und Lenkaktuator (11, 13) keinen Fehler aufweist, und
- ob ein automatischer Lenkeingriff angefordert ist.
Dabei wird der angeforderte Lenkeingriff nicht durchgeführt oder abgebrochen, wenn eine der obigen Bedingungen nicht erfüllt ist.

In einer bevorzugten Ausführungsform des Verfahren nach Anspruch 16, wird noch mindestens eine oder mehrere der weiteren Systemfunktionen und/oder Systemparameter überprüft:
a) der Betrag der Fahrzeuggeschwindigkeit ist kleiner als eine vorgegebene Geschwindigkeit,
b) der Rückwärtsgang ist eingelegt
   oder
   der Rückwärtsgang war vor einer Zeit T, die kleiner ist als eine vorgegebene Zeit Tmax, noch eingelegt und das Fahrzeug steht,
c) es erfolgt kein Lenkeingriff des Fahrers,
d) dem Steuergerät sind keine Eingriffe weiterer Assistenzfunktionen, wie beispielsweise ESP, ABS und/oder ASR, gemeldet,
e) der Betrag des Lenkmoments M_{L} ist kleiner als ein vorgegebenes Lenkmoment M_{Lmax}
f) der Betrag der Lenkgeschwindigkeit V_{L} ist kleiner als eine vorgegebene Lenkgeschwindigkeit V_{Lmax},
g) die Abweichung von einer berechneten Sollbahn ist kleiner als ein vorgegebener Wert,
wobei im Fall eines negativen Ergebnisses der Überprüfung die Assistenz beendet wird.

Eine bevorzugte Ausführungsform der Erfindung wird nachfolgend anhand der Zeichnungen erläutert.
- Fig. 1: zeigt die Fahrzeugposition nach der Vermessung einer Parklücke,
- Fig. 2: zeigt die Fahrzeugposition nach der Vermessung einer Parktasche, und
- Fig. 3: zeigt ein Blockschaltbild eines erfindungsgemäßen Fahrerassistenzsystems.

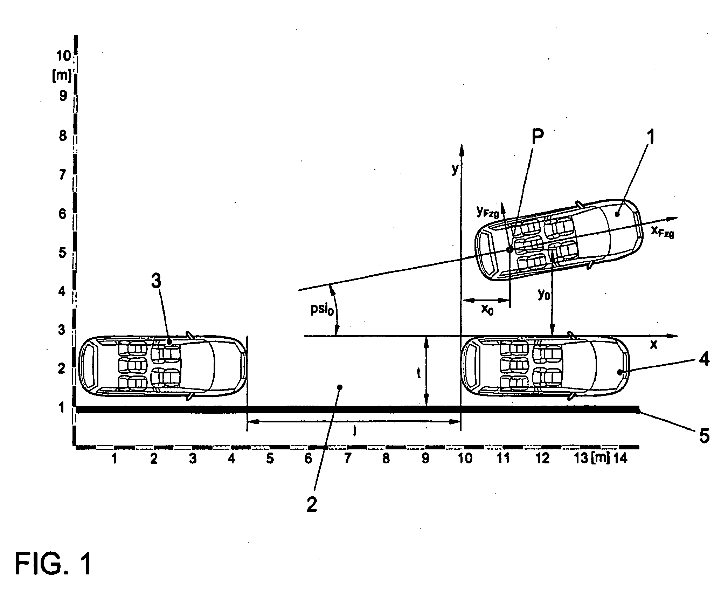

Fig. 1 zeigt die Informationen aus einer Parklückenvermessung, wobei ein Fahrzeug 1 in einer Lücke 2 zwischen zwei Fahrzeugen 3, 4 einparken möchte. Für das Fahrzeug 1 gibt es ein Koordinatensystem XY, welches parallel zu einem Bordstein 5 verläuft, wobei der Nullpunkt des XY-Koordinatensystems mit der hinteren Kante des vorderen Fahrzeuges 4 abschließt. Gemessen werden eine Parklückenlänge L, eine Parklückentiefe t, eine Position X₀ des Fahrzeugs 1, eine Position Y₀ des Fahrzeugs 1 und der Gierwinkel psi₀ des Fahrzeugs relativ zur X-Achse. Bezugspunkt für die definierten Größen ist die Mitte der Hinterachse. Aus diesen Informationen berechnet das Einparkassistenzsystem eine geeignete Trajektorie, falls dies aus der Ausgangsposition des Fahrzeugs möglich ist. Ist dies nicht der Fall, so muss sich der Fahrer des Fahrzeuges in eine andere Ausgangsposition begeben, welches ihm vom Fahrerassistenten mitgeteilt wird. Ist die Ausgangsposition des Fahrzeugs 1 relativ zur Parklücke 2 für einen Einparkvorgang geeignet, so fordert der Fahrer einen Lenkeingriff vom Einparkassistenzsystem an und ein automatischer Einparkvorgang kann beispielsweise von dem Einparkassistenzsystem vorgenommen werden.

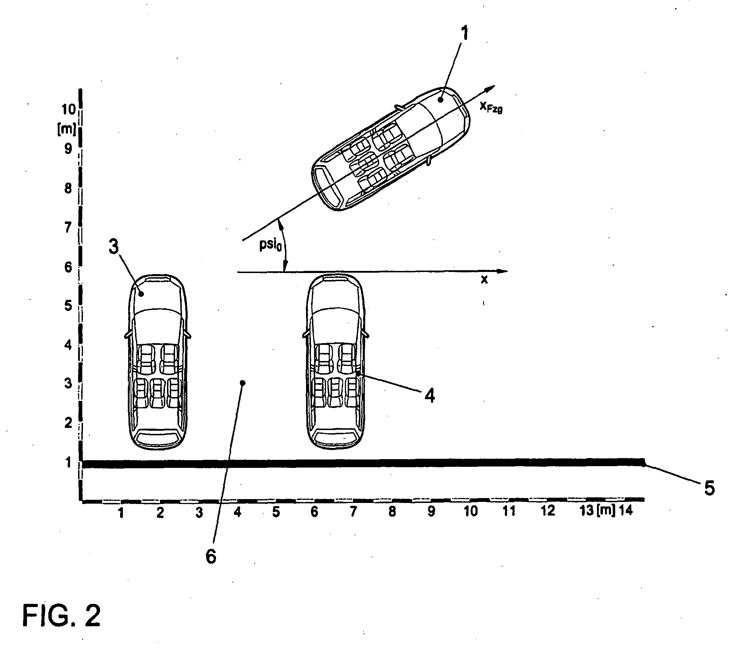

Fig. 2 zeigt die Situation eines Fahrzeugs 1 bezüglich einer Parktasche 6 zwischen den Fahrzeugen 3 und 4. Bei entsprechend günstiger Ausgangsposition kann der Fahrer eine Anforderung eines Lenkeingriffs an das Einparkassistenzsystem abgeben, wodurch beispielsweise ein automatischer rückwärtiger Einparkvorgang in die Parktasche 6 vorgenommen wird.

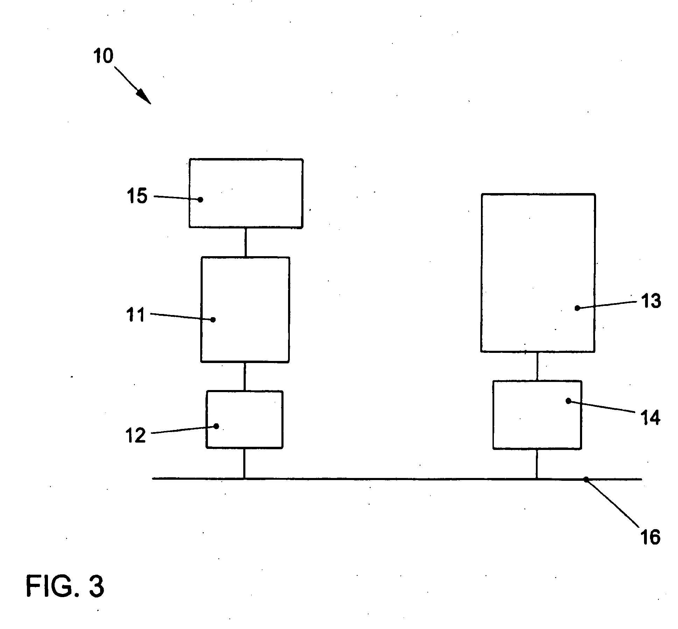

Fig. 3 zeigt in schematischer Darstellung ein Blockdiagramm eines erfindungsgemäßen Einparkassistenzsystems 10 mit einem Einparkassistenten 11 sowie einem zum Einparkassistenten zugeordneten Steuergerät 12. Selbstverständlich kann das Steuergerät 12 des Einparkassistenten 11 auch Bestandteil des Einparkassistenten 11 sein. Ferner ist ein Lenkaktuator 13 dargestellt, der durch eine geeignete elektromechanische Vorrichtung auf die Lenkung einwirkt, beispielsweise mittels eines Elektromotors und eines entsprechenden Ritzels, das auf die entsprechende Zahnstange der Lenkung wirkt. Dem Lenkaktuator 13 ist ein Steuergerät 14 zugeordnet, das ebenfalls auch Bestandteil des Aktuators 13 sein kann. Dem Einparkassistenten 11 ist ferner eine Vermessungsvorrichtung 15 zugeordnet, mit der die geometrischen Daten der Parklücke bzw. der Parktasche bestimmt werden können. Eine derartige Vermessungsvorrichtung kann durch eine geeignete Videovorrichtung, Ultraschallvorrichtung, Radarvorrichtung oder dergleichen gebildet sein.

Zum Datenaustausch sind die Steuergeräte 12, 14 in einer vorteilhaften Ausführung über einen CAN-Bus 16 mit einander verbunden. An diesen CAN-Bus 16 können selbstverständlich noch weitere Fahrerassistenzvorrichtungen angeordnet sein. Selbstverständlich können zum Datenaustausch auch andere Datenübertragungsverfahren und/oder Bussysteme eingesetzt werden.

Nachfolgend sind in tabellarischer Form mittels den Tabellen 1 und 2 die Sicherheitsabfragen im Steuergerät des Lenkaktuators und die Sicherheitsabfragen im Steuergerät des Einparkassistenten aufgeführt.

**Tabelle 1:**

| **Sicherheitsabfragen im Steuergerät 14 des Lenkaktuators:** | |
|---|---|
| Status EPS: | fehlerfrei |
| Status EPA: | fehlerfrei |
| Status ESP: | fehlerfrei |
| Kommunikation EPS/ESP: | fehlerfrei |
| Kommunikation EPS/EPA: | fehlerfrei |
| | |
| Anforderung EPA: | Lenkeingriff angefordert |
| Geschwindigkeit: | \|V\| < Vₘₐₓ (z.B. Vₘₐₓ = 5km/h) |
| Fahrstufe/Gang: | Rückwärtsgang eingelegt, oder Rückwärtsgang war vor T < Tₘₐₓ (z.B. Tₘₐₓ = 2s) noch eingelegt und das Fahrzeug steht (V = 0 km/h) |
| Fahrerlenkeingriff: | Lenkmoment des Fahrers \|M_{F}\| > M_{Fmin} (z.B. M_{Fmin} = 2.5Nm) |
| ESP/ABS/ASR-Eingriff: | Keine Eingriffe |
| Begrenzung des Lenkmoments: | \|M_{L}\| < M_{Lmax}(z.B. M_{Lmax} = 5 Nm) |
| Begrenzung der Lenkgeschwindigkeit: | \|V_{L}\| < V_{Lmax} (z.B. V_{Lmax} = 500°/s) |

**Tabelle 2:**

| **Sicherheitsabfragen im Steuergerät 12 des Einparkassistenten:** | |
|---|---|
| Status EPS: | fehlerfrei |
| Status EPA: | fehlerfrei |
| Status ESP: | fehlerfrei |
| Kommunikation EPA/EPS: | fehlerfrei |
| Kommunikation EPA/ESP: | fehlerfrei |
| | |
| Anforderung EPA: | Lenkeingriff angefordert |
| Antwort EPS: | Lenkeingriff wird umgesetzt, kein Abbruch |
| Geschwindigkeit: | \|V\|< Vₘₐₓ (z.B. Vₘₐₓ= 5km/h) |
| FahrstufelGang: | Rückwärtsgang eingelegt, oder Rückwärtsgang war vor T < Tₘₐₓ (z.B. Tₘₐₓ = 2s) noch eingelegt und das Fahrzeug steht (V = 0km/h) |
| Fahrerlenkeingriff: | Lenkmoment des Fahrers \|M_{F}\| > M_{Fmin} (z.B. M_{Fmin} = 2.5Nm) |
| ESP/ABS/ASR-Eingriff: | Keine Eingriffe |
| | |
| Trajektorie: | Die Abweichung von der Sollbahn wird zu groß (z.B. > 0.25m) |

Sobald eine Anforderung nicht erfüllt ist, wird die Assistenz im Steuergerät 12 des Einparkassistenten beendet. Der Fahrer wird dann optisch und/oder akustisch und/oder haptisch eventuell unter Angabe des Fehlers gewarnt.

Sobald eine Anforderung nicht erfüllt ist, wird ein angeforderter Lenkeingriff nicht umgesetzt, ein Abbruchsignal vom EPS-SG gesendet und die Assistenz im EPA-SG beendet. Der Fahrer wird dann optisch und/oder akustisch und/oder haptisch gewarnt.

### BEZUGSZEICHENLISTE

- 1: Einparkende Fahrzeug
- 2: Parklücke
- 3: Hinteres Fahrzeug
- 4: Vorderes Fahrzeug
- 5: Bordstein
- 6: Parktasche

- 10: Einparkassistenzsystem
- 11: Einparkassistent
- 12: Steuergerät
- 13: Lenkaktuator
- 14: Steuergerät
- 15: Vermessungsvorrichtung
- 16: CAN-Bus

- P: Bezugspunkt Mitte der Hinterachse
- l: Parklückenlänge
- t: Parklückentiefe
- X₀: Fahrzeug X-Position
- Y₀: Fahrzeug Y-Position
- psi₀: Gierwinkel

## Patentansprüche

1. Einparkassistenzsystem zum unterstützten oder automatischen Einparken eines Kraftfahrzeugs mit einem Einparkassistenten (11) und einem Lenkaktuator (13), wobei der Fahrer zum automatischen oder unterstützten Einparken einen Lenkeingriff anfordern kann, wobei
beim Anfordern eines Lenkeingriffs seitens des Fahrers eine Sicherheitsprüfung von relevanten Systemfunktionen und/oder Systemparametern vorgenommen wird, wobei mindestens überprüft wird
ob der Einparkassistent (11) keinen Fehler meldet,
ob der Lenkaktuator (13) keinen Fehler meldet,
ob die Kommunikation zwischen Einparkassistent (11) und Lenkaktuator (13) keinen Fehler aufweist, und
ob ein automatischer Lenkeingriff angefordert ist, und wobei
der angeforderte Lenkeingriff nicht durchgeführt oder abgebrochen wird, wenn eine der obigen Bedingungen nicht erfüllt ist.

2. Einparkassistent nach Anspruch 1, **dadurch gekennzeichnet, dass** noch mindestens eine der weiteren Systemfunktionen überprüft wird:
a) der Betrag der Fahrzeuggeschwindigkeit ist kleiner als eine vorgegebene Geschwindigkeit,
b) der Rückwärtsgang ist eingelegt
oder
der Rückwärtsgang war vor einer Zeit T, die kleiner ist als eine vorgegebene Zeit Tmax, noch eingelegt und das Fahrzeug steht,
c) es erfolgt kein Lenkeingriff des Fahrers,
d) dem Steuergerät sind keine Eingriffe weiterer Assistenzfunktionen, wie beispielsweise ESP, ABS und/oder ASR, gemeldet,
e) der Betrag des Lenkmoments M_{L} ist kleiner als ein vorgegebenes Lenkmoment M_{Lmax}
f) der Betrag der Lenkgeschwindigkeit V_{L} ist kleiner als eine vorgegebene Lenkgeschwindigkeit V_{Lmax},
g) die Abweichung von einer berechneten Sollbahn ist kleiner als ein vorgegebener Wert,
wobei im Fall eines negativen Ergebnisses der Überprüfung die Assistenz beendet wird.

3. Einparkassistenzsystem nach Anspruch 2, **dadurch gekennzeichnet, dass** und der Einparkassistent (11) und der Lenkaktuator (13) jeweils ein Steuergerät (12, 14) aufweisen.

4. Einparkassistenzsystem nach Anspruch 3, **dadurch gekennzeichnet, dass** die Sicherheitsüberprüfung im Steuergerät (14) des Lenkaktuators (13) und im Steuergerät (12) des Einparkassistenten (11) vorgenommen wird und im Fall eines Abbruchs die Assistenz des Steuergeräts (12) des Einparkassistenten (11) beendet wird.

5. Einparkassistenzsystem nach Anspruch 3 oder 4, **dadurch gekennzeichnet, dass** das Steuergerät (12) des Einparkassistenten (11) dem Steuergerät (14) des Lenkaktuators (13) meldet, dass ein Lenkeingriff angefordert ist.

6. Einparkassistenzsystem nach einem der vorangegangenen Ansprüche, **dadurch gekennzeichnet, dass** der Fahrer im Fall eines Abbruchs des angeforderten Lenkeingriffs eine optische und/oder akustische und/oder haptische Warnung erhält.

7. Einparkassistenzsystem nach einem der Ansprüche 3 bis 5, **dadurch gekennzeichnet, dass** das Steuergerät (14) des Lenkaktuators (13) die Systemfunktionen oder Systemparameter a) bis f) überprüft.

8. Einparkassistenzsystem nach einem der Ansprüche 3 bis 5 oder 7, **dadurch gekennzeichnet, dass** das Steuergerät (12) des Einparkassistenzsystems (11) neben den Systemfunktionen oder Systemparametern a) bis d) und g) noch mindestens eine der weiteren Systemfunktionen überprüft:
h) das Steuergerät (14) des Lenkaktuators (13) meldet keinen Abbruch des angeforderten Lenkeingriffs.

9. Einparkassistenzsystem nach Anspruch 7 oder 8, **dadurch gekennzeichnet, dass** ein Abbruch der Assistenz erfolgt, wenn das Lenkmoment des Fahrers größer als ein vorgegebenes Lenkmoment ist.

10. Einparkassistenzsystem nach einem der Ansprüche 7 oder 8, **dadurch gekennzeichnet, dass** das Steuergerät (14) des Lenkaktuators (13) und/oder das Steuergerät (12) des Einparkassistenten (11) bei Vorhandenseins einer ESP-Assistenzsystems mit einem entsprechenden Steuergerät den Status des ESP-Steuergeräts und die Kommunikation mit dem ESP-Steuergerät überprüft.

11. Einparkassistenzsystem nach einem der vorangegangenen Ansprüche, **dadurch gekennzeichnet, dass** der Einparkassistenzsystem einen Vorrichtung (15) zur Vermessung von Parklücken (2) und/oder Parktaschen (6) aufweist.

12. Einparkassistenzsystem nach Anspruch 11, **dadurch gekennzeichnet, dass** das Einparkassistenzsystem aus den Daten der Vermessungsvorrichtung (15) eine Trajektorie zum Einparken berechnet und daraus Lenkmomentvorgaben und/oder Lenkwinkelvorgaben für das Steuergerät (14) des Lenkaktuators (13) bestimmt.

13. Einparkassistenzsystem nach Anspruch 12, **dadurch gekennzeichnet, dass** das Steuergerät (12) des Einparkassistenten (11) die Berechnungen durchführt.

14. Einparkassistenzsystem nach Anspruch 3, **dadurch gekennzeichnet, dass** die Steuergeräte (12, 14) des Lenkaktuators (13) und des Einparkassistenten (11) über einen Bus(16), insbesondere einen CAN-Bus, verbunden sind.

15. Einparkassistenzsystem nach Anspruch 14, **dadurch gekennzeichnet, dass** die Zyklusdauer der Datenübertragung zwischen den Steuergeräten (12, 14) kleiner oder gleich 10ms beträgt.

16. Verfahren zum unterstützen oder automatischen Einparken eines Kraftfahrzeugs mittels eines Einparkassistenzsystems umfassend einen Einparkassistenten (11) und einen Lenkaktuator (13), wobei der Fahrer zum automatischen oder unterstützten Einparken einen Lenkeingriff anfordern kann, wobei
beim Anfordern eines Lenkeingriffs seitens des Fahrers eine Sicherheitsprüfung von relevanten Systemfunktionen und/oder Systemparametern vorgenommen wird, wobei mindestens überprüft wird
ob der Einparkassistent (11) keinen Fehler meldet,
ob der Lenkaktuator (13) keinen Fehler meldet,
ob die Kommunikation zwischen Einparkassistent und Lenkaktuator (11, 13) keinen Fehler aufweist, und
ob ein automatischer Lenkeingriff angefordert ist, und wobei
der angeforderte Lenkeingriff nicht durchgeführt oder abgebrochen wird, wenn eine der obigen Bedingungen nicht erfüllt ist.

17. Verfahren nach Anspruch 16, **dadurch gekennzeichnet, dass** noch mindestens eine oder mehrere der weiteren Systemfunktionen überprüft wird:
a) der Betrag der Fahrzeuggeschwindigkeit ist kleiner als eine vorgegebene Geschwindigkeit,
b) der Rückwärtsgang ist eingelegt
oder
der Rückwärtsgang war vor einer Zeit T, die kleiner ist als eine vorgegebene Zeit Tmax, noch eingelegt und das Fahrzeug steht,
c) es erfolgt kein Lenkeingriff des Fahrers,
d) dem Steuergerät sind keine Eingriffe weiterer Assistenzfunktionen, wie beispielsweise ESP, ABS und/oder ASR, gemeldet,
e) der Betrag des Lenkmoments M_{L} ist kleiner als ein vorgegebenes Lenkmoment M_{Lmax}
f) der Betrag der Lenkgeschwindigkeit V_{L} ist kleiner als eine vorgegebene Lenkgeschwindigkeit V_{Lmax},
g) die Abweichung von einer berechneten Sollbahn ist kleiner als ein vorgegebener Wert,
wobei im Fall eines negativen Ergebnisses der Überprüfung die Assistenz beendet wird.

## Claims

1. Parking assistance system for performing assisted or automatic parking of a motor vehicle with a parking assistant (11) and a steering actuator (13), wherein the driver can request a steering intervention in order to perform automatic or assisted parking, wherein
when a steering intervention is requested by the driver, safety checking of relevant system functions and/or system parameters is performed by the parking assistance system, wherein it is at least checked
whether the parking assistant (11) is not signalling a fault,
whether the steering actuator (13) is not signalling a fault,
whether the communication between the parking assistant (11) and the steering actuator (13) does not have a fault, and
whether an automatic steering intervention is being requested, and wherein
the requested steering intervention is not carried out or is aborted if one of the above conditions is not met.

2. Parking assistance system according to Claim 1, **characterized in that** at least one of the further system functions is also checked:
a) the value of the velocity of the vehicle is less than a predefined velocity,
b) the reverse gear is engaged
or
the reverse gear was still engaged at time T ago which is less than a predefined time Tmax and the vehicle is stationary,
c) the driver is not performing a steering intervention,
d) no interventions by further assistance functions, for example ESP, ABS and/or a traction controller, are being signalled to the control device,
e) the value of the steering torque M_{L} is less than a predefined steering torque M_{Lmax}
f) the value of the steering speed V_{L} is less than a predefined steering speed V_{Lmax},
g) the difference from a calculated setpoint path is less than a predefined value,
wherein if the result of the checking is negative the assistance process is ended.

3. Parking assistance system according to Claim 2, **characterized in that** the parking assistant (11) and the steering actuator (13) each have a control device (12, 14).

4. Parking assistance system according to Claim 3, **characterized in** the safety checking is performed in the control device (14) of the steering actuator (13) and in the control device (12) of the parking assistant (11), and in the event of an abort the assistance by the control device (12) of the parking assistant (11) is ended.

5. Parking assistance system according to Claim 3 or 4, **characterized in that** the control device (12) of the parking assistant (11) signals to the control device (14) of the steering actuator (13) that a steering intervention is being requested.

6. Parking assistance system according to one of the preceding claims, **characterized in that** in the event of an abort of the requested steering intervention the driver is provided with a visual and/or audible and/or haptic warning.

7. Parking assistance system according to one of Claims 3 to 5, **characterized in that** the control device (14) of the steering actuator (13) checks the system functions or system parameters a) to f).

8. Parking assistance system according to one of Claims 3 to 5 or 7, **characterized in that** the control device (12) of the parking assistance system (11) checks not only the system functions or system parameters a) to d) and g) but also at least one of the further system functions:
h) the control device (14) of the steering actuator (13) does not signal an abort of the requested steering intervention.

9. Parking assistance system according to Claim 7 or 8, **characterized in that** the assistance is aborted if the steering torque of the driver is greater than a predefined steering torque.

10. Parking assistance system according to one of Claims 7 or 8, **characterized in that** if an ESP assistance system with a corresponding control device is present, the control device (14) of the steering actuator (13) and/or the control device (12) of the parking assistant (11) checks the status of the ESP control device and the communication with the ESP control device.

11. Parking assistance system according to one of the preceding claims, **characterized in that** the parking assistance system has a device (15) for measuring parking spaces and/or designated parking areas (6).

12. Parking assistance system according to Claim 11, **characterized in that** the parking assistance system calculates a trajectory for parking from the data of the measuring device (15) and determines, from said trajectory, steering torque prescriptions and/or steering angle prescriptions for the control device (14) of the steering actuator (13).

13. Parking assistance system according to Claim 12, **characterized in that** the control device (12) of the parking assistant (11) carries out the calculations.

14. Parking assistance system according to Claim 3, **characterized in that** the control devices (12, 14) of the steering actuator (13) and of the parking assistant (11) are connected via a bus (16), in particular a CAN bus.

15. Parking assistance system according to Claim 14, **characterized in that** the cycle duration of the transmission of data between the control devices (12, 14) is less than or equal to 10 ms.

16. Method for performing assisted or automatic parking of a motor vehicle by means of a parking assistance system comprising a parking assistant (11) and a steering actuator (13), wherein the driver can request a steering intervention in order to perform automatic or assisted parking, wherein
when a steering intervention is requested by the driver, safety checking of relevant system functions and/or system parameters is performed, wherein it is at least checked
whether the parking assistant (11) is not signalling a fault,
whether the steering actuator (13) is not signalling a fault,
whether the communication between the parking assistant (11) and the steering actuator (13) does not have a fault, and
whether an automatic steering intervention is being requested, and wherein
the requested steering intervention is not carried out or is aborted if one of the above conditions is not met.

17. Method according to Claim 16, **characterized in that** at least one or more of the further system functions is also checked:
a) the value of the velocity of the vehicle is less than a predefined velocity,
b) the reverse gear is engaged
or
the reverse gear was still engaged at time T ago which is less than a predefined time Tmax and the vehicle is stationary,
c) the driver is not performing a steering intervention,
d) no interventions by further assistance functions, for example ESP, ABS and/or a traction controller, are being signalled to the control device,
e) the value of the steering torque M_{L} is less than a predefined steering torque M_{Lmax}
f) the value of the steering speed V_{L} is less than a predefined steering speed V_{Lmax},
g) the difference from a calculated setpoint path is less than a predefined value,
wherein if the result of the checking is negative the assistance process is ended.

## Revendications

1. Système d'assistance au stationnement pour le stationnement assisté ou automatique d'un véhicule automobile comprenant une aide au stationnement (11) et un actionneur de direction (13), le conducteur pouvant exiger une intervention sur la direction en vue du stationnement automatique ou assisté,
le système d'assistance au stationnement effectuant une vérification de sécurité de fonctions pertinentes du système et/ou de paramètres pertinents du système en cas de demande par le conducteur d'une intervention de direction, au moins les vérifications suivantes étant effectuée :
que l'aide au stationnement (11) n'indique aucune panne,
que l'actionneur de direction (13) n'indique aucune panne,
que la communication entre l'aide au stationnement (11) et l'actionneur de direction (13) ne présente aucune panne et
qu'une intervention de direction automatique soit demandée,
l'intervention de direction demandée n'étant pas effectuée ou étant interrompue, lorsque l'une des conditions ci-dessus n'est pas satisfaite.

2. Système d'assistance au stationnement selon la revendication 1, **caractérisé en ce qu'**encore au moins l'une des autres fonctions du système est vérifié
a) l'amplitude de la vitesse du véhicule est inférieure à une vitesse prédéterminée ;
b) la marche arrière est enclenchée
ou
la marche arrière était encore enclenchée pendant un temps T qui est inférieur à un temps prédéterminé Tmax et le véhicule est à l'arrêt,
c) il n'y a pas d'intervention de direction du conducteur,
d) aucune intervention d'autres fonctions d'assistance, comme par exemple des fonctions ESP, ABS et/ou ASR, n'est communiquée à l'appareil de commande,
e) la valeur du couple de direction M_{L} est inférieure à un couple de direction prédéterminé M_{Lmax},
f) l'amplitude de la vitesse de direction V_{L} est inférieure à une vitesse de direction prédéterminée V_{Lmax},
g) l'écart d'une voie de consigne calculée est inférieur à une valeur prédéterminée,
et en cas de résultat négatif de la vérification, l'assistance est interrompue.

3. Système d'assistance au stationnement selon la revendication 2, **caractérisé en ce que** l'aide au stationnement (11) et l'actionneur de direction (13) présentent chacun un appareil de commande (12, 14).

4. Système d'assistance au stationnement selon la revendication 3, **caractérisé en ce que** la vérification de sécurité est effectuée dans l'appareil de commande (14) de l'actionneur de direction (13) et dans l' appareil de commande (12) de l'aide au stationnement (11) et dans le cas d'un arrêt, l' assistance de l' appareil de commande (12) de l'aide au stationnement (11) est interrompue.

5. Système d'assistance au stationnement selon la revendication 3 ou 4, **caractérisé en ce que** l'appareil de commande (12) de l'aide au stationnement (11) indique à l'appareil de commande (14) de l'actionneur de direction (13) qu'une intervention sur la direction est demandée.

6. Système d'assistance au stationnement selon l'une quelconque des revendications précédentes, **caractérisé en ce que** le conducteur, dans le cas d'un arrêt de l'intervention demandée sur la direction, obtient un avertissement optique et/ou acoustique et/ou tactile.

7. Système d'assistance au stationnement selon l'une quelconque des revendications 3 à 5, **caractérisé en ce que** l'appareil de commande (14) de l'actionneur de direction (13) vérifie les fonctions du système ou les paramètres du système a) à f).

8. Système d'assistance au stationnement selon l'une quelconque des revendications 3 à 5 ou 7, **caractérisé en ce que** l'appareil de commande (12) du système d'assistance au stationnement (11) vérifie, en plus des fonctions du système ou des paramètres du système a) à d) et g), encore au moins l'une des autres fonctions du système :
h) l'appareil de commande (14) de l'actionneur de direction (13) n'indique aucun arrêt de l'intervention demandée sur la direction.

9. Système d'assistance au stationnement selon la revendication 7 ou 8, **caractérisé en ce qu'**il se produit un arrêt de l'assistance lorsque le couple de direction du conducteur est plus important qu'un couple de direction prédéterminé.

10. Système d'assistance au stationnement selon l'une quelconque des revendications 7 ou 8, **caractérisé en ce que** l'appareil de commande (14) de l'actionneur de direction (13) et/ou l'appareil de commande (12) de l'aide au stationnement (11) en présence d'un système d'assistance ESP avec un appareil de commande correspondant vérifie l'état de l'appareil de commande ESP et la communication avec l'appareil de commande ESP.

11. Système d'assistance au stationnement selon l'une quelconque des revendications précédentes, **caractérisé en ce que** le système d'aide au stationnement présente un dispositif (15) pour mesurer des places de stationnement (2) et/ou des modules de stationnement (6).

12. Système d'assistance au stationnement selon la revendication 11, **caractérisé en ce que** le système d'assistance au stationnement calcule une trajectoire de stationnement à partir des données du dispositif de mesure (15), et détermine à partir de ceci des données préalables de couple de direction et/ou des données préalables d'angle de direction pour l'appareil de commande (14) de l'actionneur de direction (13).

13. Système d'assistance au stationnement selon la revendication 12, **caractérisé en ce que** l'appareil de commande (12) de l'aide au stationnement (11) effectue les calculs.

14. Système d'assistance au stationnement selon la revendication 3, **caractérisé en ce que** les appareils de commande (12, 14) de l'actionneur de direction (13) et de l'aide au stationnement (11) sont connectés par le biais d'un bus (16), en particulier un bus CAN.

15. Système d'assistance au stationnement selon la revendication 14, **caractérisé en ce que** la durée du cycle de transfert des données entre les appareils de commande (12, 14) est inférieure ou égale à 10 ms.

16. Procédé pour l'assistance au stationnement automatique d'un véhicule automobile au moyen d'un système d'assistance au stationnement comprenant une aide au stationnement (11) et un actionneur de direction (13), le conducteur pouvant demander une intervention sur la direction pour se garer automatiquement ou avec assistance, et lorsqu'il demande une intervention sur la direction, une vérification de sécurité des fonctions pertinentes du système et/ou des paramètres pertinents du système est effectuée, et il est vérifié au moins :
que l'aide au stationnement (11) n'indique aucune panne,
que l'actionneur de direction (13) n'indique aucune panne,
que la communication entre l'aide au stationnement (11) et l'actionneur de direction (13) ne présente aucune panne et
qu'une intervention de direction automatique est demandée,
l'intervention de direction demandée n'étant pas effectuée ou étant interrompue, lorsque l'une des conditions ci-dessus n'est pas satisfaite.

17. Procédé selon la revendication 16, **caractérisé en ce qu'**encore au moins l'une ou plusieurs des autres fonctions du système sont vérifiées :
a) l'amplitude de la vitesse du véhicule est inférieure à une vitesse prédéterminée ;
b) la marche arrière est enclenchée
ou
la marche arrière était encore enclenchée pendant un temps T qui est inférieur à un temps prédéterminé Tmax et le véhicule est à l'arrêt,
c) il n'y a pas d'intervention sur la direction du conducteur,
d) aucune intervention d'autres fonctions d'assistance, comme par exemple des fonctions ESP, ABS et/ou ASR, n'est communiquée à l'appareil de commande,
e) la valeur du couple de direction M_{L} est inférieure à un couple de direction prédéterminé M_{Lmax},
f) l'amplitude de la vitesse de direction V_{L} est inférieure à une vitesse de direction prédéterminée V_{Lmax},
g) l'écart d'une voie de consigne calculée est inférieur à une valeur prédéterminée,
et en cas de résultat négatif de la vérification, l'assistance est interrompue.
